(19)

**Europäisches Patentamt**
**European Patent Office**
**Office européen des brevets**

(11)　**EP 3 672 788 B1**

(12)　　　　**EUROPÄISCHE PATENTSCHRIFT**

(45) Veröffentlichungstag und Bekanntmachung des Hinweises auf die Patenterteilung:
**27.05.2026　Patentblatt 2026/22**

(21) Anmeldenummer: **18759939.4**

(22) Anmeldetag: **27.08.2018**

(51) Internationale Patentklassifikation (IPC):
**B29C 70/44** *(2006.01)*　　**B29C 33/56** *(2006.01)*
**B29C 33/60** *(2006.01)*　　**B29C 37/00** *(2006.01)*
**C08J 7/04** *(2020.01)*　　**C09J 7/40** *(2018.01)*
**B29C 43/36** *(2006.01)*

(52) Gemeinsame Patentklassifikation (CPC):
**B29C 70/443; B29C 37/0067; B32B 5/00;**
**C08J 5/243; C08J 5/244;** B29C 33/56; B29C 33/68;
C08J 2363/00; C08J 2475/04

(86) Internationale Anmeldenummer:
**PCT/EP2018/072974**

(87) Internationale Veröffentlichungsnummer:
**WO 2019/038447 (28.02.2019 Gazette 2019/09)**

(54) **KERN-MANTEL-HALBZEUG MIT EINER EINE PLASMAPOLYMERE SCHICHT UMFASSENDE VAKUUMFOLIE**

CORE/CASING SEMI-FINISHED PRODUCT COMPRISING A VACUUM FILM WHICH COMPRISES A PLASMA POLYMER LAYER

DEMI-PRODUIT NOYAU-ENVELOPPE COMPORTANT UNE FEUILLE À VIDE RENFERMANT UNE COUCHE DE POLYMÈRES PLASMA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2017　DE 102017119541**

(43) Veröffentlichungstag der Anmeldung:
**01.07.2020　Patentblatt 2020/27**

(73) Patentinhaber: **Fraunhofer-Gesellschaft zur Förderung**
**der angewandten Forschung e.V.**
**80686 München (DE)**

(72) Erfinder:
• **WILKEN, Ralph**
**28359 Bremen (DE)**
• **OTT, Matthias**
**28359 Bremen (DE)**
• **NIEPEL, Andreas**
**28359 Bremen (DE)**
• **HARTWIG, Andreas**
**28359 Bremen (DE)**

• **KOWALIK, Thomas**
**28359 Bremen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 145 751　　WO-A1-2013/160437
WO-A1-2018/078189　US-A- 5 322 665

• **ANNE-GRETE BECKER: "FlexPLAS-Trennfolie - Trennungsmittelfreie FVK-Bauteilherstellung in komplexen Heizpressen-Werkzeugen", 8 March 2018 (2018-03-08), Bremen, pages 1 - 2, XP055525867, Retrieved from the Internet <URL:https://www.ifam.fraunhofer.de/content/ dam/ifam/de/documents/IFAM-Bremen/presse/ 2018/Pressemitteilung%20FlexPLAS-Trennfolie %20-%20Trennmittelfreie% 20FVK-Bauteilherstellung%20in%20komplexen %20Heizpressen-Werkzeugen.pdf> [retrieved on 20181121]**

EP 3 672 788 B1

# EP 3 672 788 B1

**Beschreibung**

Die Erfindung betrifft ein Kern-Mantel-Halbzeug, umfassend einen Kern, der eine Matrix und Verstärkungselemente umfasst und einen den Kern umschließenden Mantel. Die Erfindung betrifft ferner eine Anordnung aus einem erfindungsgemäßen Kern-Mantel-Halbzeug und einem Formwerkzeug zur Herstellung eines Bauteils aus dem Kern und die Verwendung eines Mantels, um mittels Unterdruckes in dem Mantel die Biegefestigkeit eines Kernes zu erhöhen. Außerdem betrifft die Erfindung ein Verfahren zur Herstellung eines erfindungsgemäßen Kern-Mantel-Halbzeuges sowie ein Verfahren zum Herstellen eines Formteiles aus einem erfindungsgemäßen Kern-Mantel-Halbzeug.

Stand der Technik

Für die Herstellung von Bauteilen aus Faserverbundkunststoffen (FVK) gibt es zwei Hauptherangehensweisen:

- Es werden trockene Fasern, Faserhalbzeuge oder Preforms verwendet, die mit Matrixharz infiltriert werden oder
- es werden harzimprägnierte Faserhalbzeuge eingesetzt, die in das Formwerkzeug mit entsprechendem Lagenaufbau abgelegt werden. Im Anschluss findet die Härtung statt.

Insbesondere zur Herstellung flächiger FVK-Bauteile (z.B. Außenhaut von Flugzeugen (Rumpf / Flügel / Leitwerke) oder Rotorblätter für Windenergieanlagen oder Autokarosserie-Bauteile) werden diese Verfahren eingesetzt.

Möchte man trockene Fasern nutzen, so ist die lagenweise Infiltration des flächigen Bauteils notwendig (manuell, typisch beim Bootsbau) und/oder man muss ausreichend Speiser für die Zugabe des Matrixharzes vorsehen (Infusions- oder RTM-Prozesse). Die RTM-Technologie stößt aufgrund mangelnder Infiltration bei großen flächigen und dünnen Bauteilen an ihre Grenzen.

Möchte man blechartige, also flächige Bauteile mit geringer Wandstärke (< 2 mm) herstellen, ist die Verwendung von mit Matrixharz vorimprägnierten Faserhalbzeugen (Prepreg) notwendig, beispielsweise wie in der DE 10 2013 227 142 A1 beschrieben.

Typischerweise werden Mehrfachlagenaufbauten hergestellt. Dazu werden flächige Prepregs (Tapes) lagenweise mit der gewünschten Faserorientierung in die Werkzeugform eingelegt, ein Vakuumaufbau erstellt, evakuiert und schließlich ausgehärtet.

Um das Bauteil aus dem Formwerkzeug entnehmen zu können, ist die Verwendung von klassischen Formtrennmitteln, semipermanenten Formtrennmitteln, permanenten Trennschichten (siehe z.B. DE102013219331B3) oder die Verwendung von Trennfolien (z.B. Fluorpolymerfolien oder dehnfähige Trennfolien - siehe z.B. DE102006018491 A1 oder WO2014/124945 A1) notwendig. EP2145751A1 offenbart den Oberbegriff des Anspruchs 1.

Der Zuschnitt der Prepreg-Halbzeuge erfolgt entweder direkt vor Einlegen des Prepregs in die Form oder, bei Verwendung von Tape-Legern bzw. bei der automatisierten Faserpositionierung, direkt während des Ablegeprozesses. Eine Möglichkeit, dieses konfektionierte Halbzeug (nicht ausgehärteter Lagenstapel) vorzuformen, besteht nicht, da es über eine geringe Biegefestigkeit verfügt. Daher muss der Aufbau dieses Halbzeugs in dem Formwerkzeug geschehen, lange Belegungszeiten des Werkzeugs sind die Folge.

Vor diesem Hintergrund war es Aufgabe der vorliegenden Erfindung, Mittel bereitzustellen, die die Nachteile des Standes der Technik überwinden oder wenigstens abmildern.

Insbesondere war es Ziel der vorliegenden Erfindung, eine zuverlässige Durchdringung mit Matrixharz für das zu erzeugende Bauteil zu gewährleisten und gleichzeitig die Vorbereitungszeit für die eigentliche Bauteilherstellung (Aushärtung) insbesondere in der Form möglichst gering zu halten. Gleichzeitig war es bevorzugte Aufgabe der vorliegenden Erfindung, die Belegungszeit (der Form/des Werkzeugs) insgesamt möglichst gering zu halten. Bevorzugt sollte auch eine gute Entnehmbarkeit des (ausgehärteten) Bauteils aus der Form/dem Werkzeug ermöglicht werden.

Diese Aufgabe wird gelöst durch ein Kern-Mantel-Halbzeug gemäss Anspruch 1, umfassend einen Kern, der eine Matrix und Verstärkungselemente umfasst, und einen den Kern umschließenden Mantel, wobei der Mantel eine dehnfähige Folie umfasst oder aus dieser besteht und so ausgestaltet ist, dass er einen Unterdruck in dem von ihm umschlossenen Raum halten kann.

Unter einem Halbzeug im Sinne der Erfindung versteht man ein vorgefertigtes Werkstück, aus dem durch Weiterbearbeitung ein Bauteil entsteht. Typische Halbzeuge im Sinne dieser Anmeldung sind zugeschnittene textile Flächengebilde, bevorzugt mehrere Lagen umfassend, wobei das textile Flächengebilde bevorzugt Teil des Kerns des Kern-Mantel-Halbzeugs ist. Dabei versteht der Fachmann, dass ein Halbzeug im Sinne der vorliegenden Erfindung ein Gegenstand ist, der üblicherweise eine Stufe eines mehrstufigen Fertigungsvorgangs darstellt. Ein Halbzeug im Sinne der vorliegenden Erfindung liegt nur dann vor, wenn ein mehrstufiger Fertigungsvorgang zu einem Zeitpunkt (zu einer frühen Fertigungsstufe, also nicht der Endfertigungsstufe) unterbrochen wird und das Zwischenprodukt tatsächlich separat gehandhabt wird in einer Form, die keine unmittelbare Weiterverarbeitung hin zum Endprodukt darstellt. Eine solche Handhabung kann z. B. sein: getrenntes Lagern, Verkauf, Transport, Montage, Fügen, Beschichten, Kleben etc.

Ein Kern-Mantel-Halbzeug ist dabei ein solches, das vom Material her deutlich unterscheidbar einen inneren Bereich (Kern) und einen äußeren Bereich (Mantel) umfasst.

Im Sinne der vorliegenden Erfindung ist der Mantel so ausgestaltet, dass die dehnfähige Folie einen geschlossenen Raum umfasst, in dem sich der Kern befindet. Dies schließt nicht aus, dass die dehnfähige Folie des Mantels durch eine Vorrichtung wie etwa ein Ventil zum Belüften/Entlüften unterbrochen ist, wobei auch in diesem Falle die Folie so an diese Unterbrechung angeschlossen ist, dass ein Unterdruck erhalten werden kann. So ist z. B. ein Ventil mit der entsprechenden Folie gasdicht gefügt, z.B. verschweißt. Nicht unter einem Mantel im Sinne der vorliegenden Erfindung ist zu verstehen, wenn verschiedene Folienteile nur durch äußere Bauteile (wie z. B. eine Form) zusammengepresst werden, so dass ein Unterdruck gehalten werden kann. Mit anderen Worten, der Mantel im Sinne der vorliegenden Erfindung wird immer aus einem Werkstück gebildet und nicht aus zwei separaten Teilen. Dementsprechend ist in dieser Situation, wo Folien in eine Form eingelegt werden (z. B. während eines Formungsprozesses) kein Mantel gegeben, wenn der Unterdruck nur mit Hilfe der (umschließenden) Form gehalten werden kann. Im Sinne der vorliegenden Erfindung ist jedenfalls ein formgebendes Werkzeug (eine Form) nicht Bestandteil des Mantels.

Eine Matrix im Sinne dieser Anmeldung ist eine Kunststoffmatrix, die bei Faserverbundkunststoffen (FVK) die Fasern umgibt. Matrices für faserverstärkte Kunststoffe bestehen üblicherweise aus duroplastischen, elastomeren oder thermoplastischen Kunststoffen.

Im Sinne dieser Anmeldung sollen als Verstärkungselemente bevorzugt Verstärkungsfasern, wie sie für die Herstellung von FVK eingesetzt werden, verstanden werde. Diese können z. B. aus unterschiedlichen Textilkombinationen (beispielsweise Endlosfaser, Kurzfaser, Vlies, Gewebe, Gelege) und Fasermaterialien (beispielsweise Kohlenstoff-, Glas- oder Naturfasern, sowie organische oder anorganische Fasern) bestehen. Alternativ oder zusätzlich können Verstärkungselemente und Einleger insbesondere als Bleche, Metallfolien, Metallgitter, bereits ausgehärtete Halbzeuge, Doppler- und Befestigungselemente ausgeformt sein.

Im Sinne dieser Anmeldung soll eine Folie als dehnfähige Folie bezeichnet werden, wenn sie bei Messungen gemäß DIN EN ISO 527 unter den als bevorzugt aufgeführten Klimabedingungen sowohl in Maschinenrichtung (MD) als auch quer dazu (CD) eine Reißdehnung von mindestens 20 % aufweist, bevorzugt, wenn sie bei diesen Messungen bei 10 % Dehnung eine Spannung von weniger als 60 MPa aufweist, besonders bevorzugt eine Spannung von weniger als 40 MPa.

In einem Raum ist ein Unterdruck vorhanden, wenn der Druck in dem Raum geringer ist als der den Raum umgebende Umgebungsdruck. Bevorzugt ist ein Unterdruck im Sinne der vorliegenden Erfindung ein solcher Unterdruck, bei dem der Druck (in Hektopascal bzw. Millibar gemessen) um mindestens 20% geringer ist als der umgebende Druck.

Im Sinne dieser Anmeldung wird davon gesprochen, dass ein Unterdruck in einem Raum gehalten wird, wenn bei einer anfänglichen Druckdifferenz von mindestens 200 hPa die Differenz zwischen dem (Unter-)Druck in dem geschlossenen Raum und dem Umgebungsdruck innerhalb von 5 Minuten, bevorzugt innerhalb von 15 Minuten, weiter bevorzugt innerhalb von 1,0 Std., noch weiter bevorzugt innerhalb von 24 Std. und besonders bevorzugt innerhalb von 14 Tagen, nicht um mehr als 50 % abnimmt.

Es hat sich herausgestellt, dass es die Erfindung ermöglicht, Kern-Mantel-Halbzeuge bereitzustellen, die besonders gut handhabbar sind: Es ist möglich, den Kern so auszugestalten, dass er weitgehend in die Form des daraus zu erstellenden Bauteils (oder den Teil eines Bauteils) hinsichtlich seiner räumlichen Ausgestaltung vorwegnimmt. Dabei ist es bevorzugt, dass der Kern hinsichtlich seiner Ausgestaltung an das für die Erstellung des Bauteiles vorgesehene Werkzeug angepasst ist. Dabei kann insbesondere Material oder eine Materialkombination aus Materialien, ausgewählt aus der Gruppe umfassend Matrixmaterial, Fasern und Verstärkungselementen für den Kern eingesetzt werden, wobei das Material oder die Materialkombination aufgrund ihrer Beschaffenheit und Zusammensetzung (z. B. Schüttung und Stapelung) im nicht evakuierten, nicht komprimierten Zustand ein verhältnismäßig geringes Biegemodul besitzt, bevorzugt ein Biegemodul kleiner 1000 MPa, besonders bevorzugt kleiner 500 MPa und ganz besonders bevorzugt kleiner 100 MPa besitzt, jeweils bestimmt durch einen 3-Punkt-Biegeversuch (siehe unten) und wobei der Wert des Biegemoduls das Biegemodul des gesamten Kerns beschreibt, unabhängig davon, ob es sich um ein unvermischtes Material oder eine Materialkombination handelt. Eine Versteifung des Kerns kann nämlich erzeugt werden, indem das Kern-Mantel-Halbzeug mit einem Unterdruck beaufschlagt wird, indem der Mantel (in dem der Kern angeordnet ist) wenigstens teilweise evakuiert wird. Die resultierende Erhöhung des Biegemoduls und die sich daraus ergebende verbesserte Handhabbarkeit des Kern-Mantel-Halbzeuges ist überraschend und konnte so nicht erwartet werden.

Das Mantelmaterial verfügt auf der zum Kern hin ausgerichteten Oberfläche über erhöhte dehäsive Eigenschaften gegenüber dem Kern, verglichen mit dem Mantelmaterial im Inneren des den Mantel bildenden Materials.

Eine erhöhte dehäsive Eigenschaft gegenüber dem Inneren des den Mantel bildenden Materials liegt dann vor, wenn das Material, das die Oberfläche des Mantels (zum Kern hin ausgerichtet) bildet, (durch mechanisches Abziehen) leichter vom Kern-Material lösbar ist, als es das Material wäre, das sich in der Mitte des Mantels befindet. Dehäsive Eigenschaften werden bevorzugt durch eine spezielle Oberflächenbehandlung des Mantel-Materials erzeugt. Hierzu stehen dem Fachmann verschiedene Beschichtungstechniken und eine Reihe von chemischen Modifizierungen zur Verfügung.

Bevorzugt ist im Sinne der Erfindung ein Kern-Mantel-Halbzeug, wobei die Vicat-Erweichungstemperatur gemäß ISO306 VST/A/50 der dehnfähigen Folie ≥ 5 ° C, bevorzugt ≥ 10 °, weiter bevorzugt ≥ 20 °C und besonders bevorzugt ≥ 50 °C höher ist als die entsprechende Vicat-Erweichungstemperatur und/oder die Aushärtungstemperatur der Matrix.

Durch diese erfindungsgemäß bevorzugte Ausgestaltung ist es möglich, bei geeigneter Verfahrensführung bei der tatsächlichen Herstellung des Formteils die Temperatur so zu führen, dass die Matrix gut verformbar ist, ohne dass das Mantel-Material dabei den Vorgang beeinflusst.

Grundsätzlich ist es ein großer Vorteil der vorliegenden Erfindung, dass das Kern-Mantel-Halbzeug mit dem Mantel in das Formwerkzeug eingelegt werden kann, insbesondere in der Kombination mit dehäsiven Eigenschaften gegenüber dem Kern seitens der Innenseite des Mantels, da so die Entnahme des Formteils aus dem Werkzeug erleichtert wird. Der Mantel dient dann quasi als Einleger oder als Trennschicht. Gleichzeitig bleibt das Kern-Mantel-Halbzeug stets gut handhabbar.

Erfindungsgemäss verfügt der Mantel auf der zum Kern hin ausgerichteten Oberfläche wenigsten teilflächig über eine plasmapolymere Schicht.

Plasmapolymere Schichten lassen sich besonders gut hinsichtlich ihrer Oberflächeneigenschaften ausgestalten. Gleichzeitig verfügen sie - insbesondere bei entsprechender Ausgestaltung - über eine gute Haftung zu Polymerfolien.

Bevorzugt ist ein erfindungsgemäßes Kern-Mantel-Halbzeug, wobei der Mantel bei 20 °C vakuumtiefziehfähig ist.

Im Sinne dieser Anmeldung gilt eine Folie (Mantel) als vakuumtiefziehfähig, wenn sie in einen Tiefziehkegelstumpf mit einem lichten Durchmesser von 152 mm an der Oberkante, einer lichten Tiefe von 43 mm und einem luftdurchlässigen Sintereinsatz mit einem Durchmesser von 100 mm als Boden bei einem Unterdruck von mehr als 900 hPa in den Tiefziehkegel gesaugt werden kann und danach mehr als 80 % der Oberfläche des Bodens berührt, nachdem sie vorher spannungsfrei flach über dem Tiefziehkegelstumpf angeordnet und am Kegelrand fixiert wurde. Bevorzugt bleibt die vakuumtiefziehfähige Folie nach diesem Tiefziehen länger als 60 Minuten ohne zu reißen in dem evakuierten Tiefziehkegelstumpf.

Die Tiefziehfähigkeit des Mantels besitzt den Vorteil, dass die Verfahrensführung so ausgestaltet werden kann, dass der Mantel tatsächlich die Oberfläche des Werkzeuges, die für die Abformung bzw. Ausformung des Formteils gedacht ist, faltenfrei bedecken kann.

Bevorzugt ist ein erfindungsgemäßes Kern-Mantel-Halbzeug, wobei der Mantel eine Absaugöffnung besitzt, die ein wiederholtes Erzeugen eines Unterdruckes im Inneren des Mantels ermöglicht.

Bevorzugte Absaugvorrichtungen sind ein Ventil, ein Saugstutzen, eine Kanüle oder ein mit Hahn versehener Schlauch, insbesondere solche, die eine wiederholte Evakuierung bzw. Unterdruckbelegung des Mantels ermöglichen.

Bevorzugt ist ein erfindungsgemäßes Kern-Mantel-Halbzeug, wobei der Druck im Inneren des Mantels ≤ 300 hPa, bevorzugt ≤ 200 hPa, besonders bevorzugt ≤ 100 hPa, weiter bevorzugt ≤ 50 hPa beträgt.

Erfindungsgemäß bevorzugt ist ein Kern-Mantel-Halbzeug, wobei die Verstärkungselemente wenigstens teilweise ausgewählt sind aus der Gruppe bestehend aus Textilfaseranordnungen, insbesondere aus Endlosfasern oder Kurzfasern oder als Vlies, Gewebe oder Gelege und Fasern, insbesondere Kohlenstoff-, Glas-, Natur-, organische oder anorganische Fasern. Es können aber als Verstärkungselemente auch Einleger, z. B. Bleche, bereits ausgehärtete Halbzeuge, Doppler, Befestigungselemente oder Ähnliches eingesetzt werden. Wichtig ist hierbei, dass die Verstärkungselemente sofern sie nicht vorgeformt sind, ein dem Kernmaterial vergleichbares Biegemodul aufweisen. Vorgeformte Verstärkungselemente, die bereits der Zielgeometrie in vorhergehenden Schritten angepasst wurden, können auch deutlich höhere Biegemodule, z.B. umgeformte Stahlbleche, aufweisen Alternativ ist es möglich, Einleger auch nur lokal einzubringen, sodass das Kern-Mantel-Halbzeug immer noch über ein geringes Biegemodul insgesamt verfügt.

Die beschriebenen Verstärkungselemente haben sich als besonders geeignet für die Erfindung erwiesen.

Bevorzugt ist ein erfindungsgemäßes Kern-Mantel-Halbzeug, wobei der Kern mehrere Lagen eines mit einer Matrix vorimprägnierten Faserhalbzeugs (Prepreg) und/oder alternierende Lagen Verstärkungselemente und Matrix in Folienform und/oder alternierende Lagen Verstärkungselemente und Matrix in Pulverform und/oder Einlageelemente umfasst.

Ein imprägniertes Faserhalbzeug im Sinne dieser Anmeldung ist ein Halbzeug, dessen Verstärkungselemente, insbesondere Fasern, bereits mit einer Kunststoffmatrix belegt sind.

Einlageelemente im Sinne dieser Erfindung sind solche Bestandteile im Kern, die zwischen oder auf den Lagen von Verstärkungselementen angeordnet sind und kein Matrix-Material darstellen. Bevorzugt handelt es sich hierbei um Befestigungslegungselemente, Dichtungen, Abstandshalter, elektrische Leiterbahnen, Multifunktionsmaterialen und/oder andere Füllmaterialien.

Im Sinne der Erfindung ist ein Kern-Mantel-Halbzeug bevorzugt, bei dem der Kern aus mehreren Lagen eines mit einer Matrix vorimprägnierten Faserhalbzeugs (Prepreg) besteht. Besonders bevorzugt ist die Matrix bei 25 °C trocken und tackfrei (besitzt eine nicht klebende Oberfläche (Tack oder Klebrigkeit ist die Eigenschaft von Haftklebstoffen, eine sofortige Haftung an fast allen Werkstoffen zu bewirken. (G. Habenicht, Kleben: Grundlagen, Technologien, Anwendungen, 6. Auflage, 2009, Springer-Verlag, ISBN 978-3-540-85264-3), oder allgemeiner die Sofortklebrigkeit einer klebend wirkenden Substanz bei der Berührung einer Oberfläche) und kann thermisch zu einem Duromer ausgehärtet werden. Solche Prepregs sind beispielsweise in der DE 10 2013 227 142 A1 offenbart.

Selbstverständlich ist es im Sinne der vorliegenden Erfindung grundsätzlich bevorzugt, dass der Kern aus alternierenden Lagen Faser und Matrix besteht. Die gerade beschriebene Ausgestaltung in Form von mehreren Lagen Faserhalbzeug (Prepreg) ist hiervon eine besondere Ausgestaltungsform.

In manchen Fällen kann es auch bevorzugt sein, dass das Kern-Mantel-Halbzeug aus alternierenden Lagen Faser und Matrix als Pulverschicht besteht. Hierzu sind dem Fachmann geeignete Pulver bekannt, die für den Einsatz für Halbzeuge für FVK-Bauteile geeignet sind. Außerdem sind eingewobene Fasern aus Matrix-Material möglich, die dann beim Erhitzen umschmelzen

In manchen Fällen kann es auch bevorzugt sein, dass das Kern-Mantel-Halbzeug aus alternierenden Lagen Faser und Matrix als Folie besteht. Hierzu sind dem Fachmann geeignete Folien bekannt, die für den Einsatz für Halbzeuge für FVK-Bauteile geeignet sind. Außerdem sind eingefärbte Folien oder Pulver aus Matrix-Material möglich, die dann beim Erhitzen aufschmelzen und eine lackierte Oberfläche des Bauteils ergeben.

Es kann im Sinne der vorliegenden Erfindung bevorzugt sein, dass das Kern-Mantel-Halbzeug im Kern unterschiedliche Textilkombinationen als Verstärkungselemente umfasst. Entsprechendes gilt auch für Fasermaterialien als Verstärkungselemente, oder Kombinationen aus Textil- und Fasermaterialien. Bevorzugte Fasermaterialien im Sinne der vorliegenden Erfindung sind Kohlenstoff-, Glas-, Natur-, organische und anorganische Fasern.

Für viele Anwendungen kann es bevorzugt sein, dass bei dem erfindungsgemäßen Kern-Mantel-Halbzeug Teile des Kerns aus einer oder mindestens zwei unterschiedlichen Matrixkombinationen (beispielsweise aus Duromer/Duromer, Duromer/Thermoplast. Duromer/Elastomer, Duromer/Vitrimer, Thermoplast/Thermoplast, Thermoplast/Elastomer, Thermoplast/Vitrimer, Elastomer/Elastomer, Elastomer/Vitrimer oder Vitrimer/Vitrimer) bestehen. Dabei ist es grundsätzlich möglich, dass diese Matrixkombinationen räumlich voneinander getrennte Schichten ergeben oder aber auch gegebenenfalls miteinander gemischt werden

Ferner kann das Matrixmaterial gemeinhin in der Polymertechnik bekannte Füllstoffe bzw. Additive enthalten, beispielhaft seien Russ, Siliciumdioxid, Aluminiumoxid, Aluminiumpulver, Titandioxid, Aluminiumhydroxid, Talk, Beschleuniger, Thermoplasten, Kern-Schale-Kautschuke, Flammschutzmittel, Benetzungsmittel, Pigmente, UV-Absorber, Viskositätsmodifizierungsmittel und/oder Antioxidanzien genannt.

Erfindungsgemäß kann es bevorzugt sein, dass der Mantel des Kern-Mantel-Halbzeugs bereits vorgespannt ist. Vorgespannt bedeutet, dass der Mantel beim Aufbringen auf den Kern bereits einer Dehnung unterzogen worden ist. Der Vorteil einer solchen Vorspannung ist darin zu sehen, dass beim Umformen bzw. beim Ausformen des Bauteils zum Beispiel im Formwerkzeug kein Faltenwurf durch den Mantel entsteht.

Bevorzugt ist ein erfindungsgemäßes Kern-Mantel-Halbzeug, bei dem der Mantel über eine Hitzeeinbringung so verschweißt ist, dass er einen Unterdruck in dem von ihm umschlossenen Raum halten kann.

Gängige Schweißverfahren für Mantelfolien wie im klassischen Vakuumierprozess sind dem Fachmann geläufig.

Alternativ oder zusätzlich bevorzugt kann ein erfindungsgemäßes Kern-Mantel-Halbzeug sein, bei dem der Mantel wenigstens teilweise mit Klebstoff verschlossen ist.

Erfindungsgemäß bevorzugt ist ein Kern-Mantel-Halbzeug, bei dem der Mantel mindestens aus einer Polymerschicht besteht, die wenigstens einseitig mit einer Plasmapolymerschicht versehen ist, wobei die Plasmapolymerschicht an der Oberfläche (gemessen mittels XPS) bezogen auf die Gesamtzahl aller Elemente (ohne Wasserstoff) zu mindestens 90 Atom-% aus den Elementen Si, C und O besteht, und wobei die Elemente bevorzugt im folgenden Verhältnis vorliegen:

$$0,90 \leq n(O) : n(Si) \leq 1,90$$

$$1,70 \leq n(C) : n(Si) \leq 2,90$$

$$0,90 \leq n(C) : n(O) \leq 2,50$$

Bevorzugt weist die Plasmapolymerschicht eine Schichtdicke von $\leq 300$ nm, besonders bevorzugt $\leq 120$ nm, weiter bevorzugt $\leq 50$ nm auf. Ebenfalls besitzt sie bevorzugt eine Mindestschichtdicke von $\geq 3$ nm, weiter bevorzugt $\geq 5$ nm und besonders bevorzugt $\geq 8$ nm.

Bei dem erfindungsgemäßen Kern-Mantel-Halbzeug ist es bevorzugt, dass der Mantel aus wenigstens zwei Polymerschichten besteht, wobei die Vicat-Erweichungstemperatur der zum Kern gerichteten Schicht $\geq 5$ °C unterhalb

der außenliegenden Schicht liegt.

Damit ist ein einfaches Verschweißen der Folie möglich, ohne dass die außenliegende Polymerschicht schmilzt und beispielsweise an den Schweißbacken haftet.

Bevorzugt besteht der Mantel bei dem erfindungsgemäßen Kern-Mantel-Halbzeug aus einem thermoplastischen Polymer oder einem thermoplastischen Elastomer, weiter bevorzugt aus einer thermoplastischen Elastomerfolie, wobei diese Folie besonders bevorzugt auf Polyesterbasis oder auf der Basis von Polyurethan oder besonders bevorzugt auf der Basis von Polyether-Polyester-Blockcopolymeren oder von Polybutylenterephthalat hergestellt ist oder daraus besteht.

Bevorzugt besitzt der Mantel im erfindungsgemäßen Kern-Mantel-Halbzeug eine Stärke von $\leq 120 \ \mu m$, besonders bevorzugt $\leq 75 \ \mu m$ und weiter bevorzugt $\leq 50 \ \mu m$.

Ebenfalls bevorzugt besitzt der Mantel im erfindungsgemäßen Kern-Mantel-Halbzeug eine Stärke von $\geq 10 \ \mu m$, besonders bevorzugt $\geq 15 \ \mu m$ und weiter bevorzugt $\geq 20 \ \mu m$.

Erfindungsgemäß bevorzugt kann es sein, dass das erfindungsgemäße Kern-Mantel-Halbzeug Bereiche erhöhter Aushärtungsgrade der Harzmatrix umfasst.

So ist es zum Beispiel mit einer punktuellen Härtung möglich, die Formtreue und Steifigkeit bei der Handhabung der noch nicht (vollständig) ausgehärteten Halbzeuge zu verbessern.

Dabei kann es bevorzugt sein, dass das erfindungsgemäße Kern-Mantel-Halbzeug sogar Bereiche besitzt, die vollständig ausgehärtet sind.

Es ist auch möglich, dass das erfindungsgemäße Kern-Mantel-Halbzeug unterschiedliche Fasern oder Matrixsysteme im Kern umfasst. Dabei ist es möglich, dass die Matrixsysteme im Kern unterschiedlichen Aushärtungsmechanismen unterliegen oder unter unterschiedlichen Aushärtungsbedingungen ausgehärtet werden. Solche unterschiedlichen Aushärtungsbedingungen können beispielsweise Temperaturunterschiede sein. So ist es grundsätzlich möglich, zunächst Teile des erfindungsgemäßen Kern-Mantel-Halbzeugs auszuhärten, indem Aushärtungsbedingungen eingestellt werden, bei denen nur eines der Matrixsysteme aushärtet. In einem zweiten Schritt könnte dann das zweite Aushärtungssystem aktiviert werden. Selbstverständlich kann es auch möglich sein, bei unterschiedlichen Matrixsystemen die Aushärtungsbedingungen so einzustellen, dass trotzdem beide Aushärtungsmechanismen gleichzeitig ablaufen.

Teil der Erfindung ist auch eine Anordnung aus einem erfindungsgemäßen Kern-Mantel-Halbzeug und einem Formwerkzeug zur Herstellung eines Bauteils aus dem Kern.

Das Formwerkzeug wird zur Formgebung eines FVK verwendet. Das Formwerkzeug besteht bevorzugt aus einer Matrize (konkav) und einer Patrize (konvex). Bei Aufeinanderlegen der beiden Formwerkzeugteile (Matrize und Patrize) bilden sie im Inneren eine Kavität, die im Wesentlichen der Bauteilgeometrie entspricht. Häufig wird die Kavität so ausgelegt, dass zusätzlich zur Endform ein Rand vorgesehen wird, der nach Entnahme des ausgehärteten Halbzeugs durch umlaufendes Fräsen des Bauteilrandes entfernt wird.

In der erfindungsgemäßen Anordnung ist es möglich, aus dem erfindungsgemäßen Kern-Mantel-Halbzeug das Bauteil zu formen. Bevorzugt ist dabei das Formwerkzeug beheizbar.

Grundsätzlich kann das Formwerkzeug auch lediglich in Form einer Presse ausgestaltet sein.

Es kann erfindungsgemäß bevorzugt sein, dass bei einer erfindungsgemäßen Anordnung der Mantel gegenüber der Form nach Ausformung eines Bauteils aus dem Kern am Bauteil fester haftet als an der Form. Im Sinne dieser Anmeldung haftet der Mantel gegenüber der Form nach Ausformung des Bauteils aus dem Kern am Bauteil fester als an der Form, wenn bei der Entnahme des Bauteils aus der Form eine größere Fläche des Mantels am Kern haftet als an der Form. Bevorzugt ist in diesem Zusammenhang, dass der gesamte Mantel nach Entnahme des Formteils aus der Form am Bauteil haften bleibt.

In diesem Fall benötigt man keine weiteren Trennmittel, da so das Bauteil nach Ausformung sich hervorragend aus der Form entnehmen lässt. Gleichzeitig ist das fertige Bauteil durch den Mantel mit einer Schutzfolie überzogen. Wenn der Mantel - wie oben beschrieben - in einer bevorzugten Form auf der Innenseite mit dehäsiven Eigenschaften gegenüber dem Bauteil ausgestattet ist, lässt sich diese Folie entsprechend leicht abziehen. Selbstverständlich ist es im Sinne der vorliegenden Erfindung bevorzugt, dass in der erfindungsgemäßen Anordnung die dehäsiven Eigenschaften gegenüber der Form höher sind als gegenüber dem Bauteil. Dabei kommt es selbstverständlich nicht auf die absoluten dehäsiven Eigenschaften an (wie z. B. über den Wasserrandwinkel feststellbar), sondern es kommt - materialabhängig - auf die Verhältnisse des Mantels zu den jeweiligen Kontaktmaterialien an.

Entsprechend ist eine erfindungsgemäß Anordnung bevorzugt, wobei das Mantelmaterial auf der zur Form hin ausgerichteten Oberfläche über erhöhte dehäsive Eigenschaften gegenüber der Form verfügt, verglichen mit dem Mantelmaterial im Inneren des Mantels, insbesondere gegenüber dem Kernmaterial.

Erfindungsgemäß bevorzugt ist eine Anordnung, wobei das Kernmaterial vor Ausformung des Bauteils so ausgestaltet ist, dass es die Dimensionen des zukünftigen Bauteils an keiner Stelle um mehr als einen Zentimeter überschreitet.

Durch diese Vorbereitung ist es möglich, das Kernmaterial gut in die Form einzubringen.

Teil der Erfindung ist auch die Verwendung eines Mantels wie oben beschrieben, insbesondere in den bevorzugten Ausgestaltungsformen, um mittels eines Unterdrucks in dem Mantel den Biegemodul des Kerns zu erhöhen.

Das Biegemodul beschreibt die Durchbiegung einer Probe in Abhängigkeit von der angelegten Kraft, der Probenlänge, -breite und - dicke. Das Biegemodul wird typischerweise durch den Dreipunktbiegeversuch ermittelt. Dabei wird die Prüfprobe auf zwei Auflagen positioniert und in der Mitte mit einem Prüfstempel belastet. Das Biegemodul berechnet sich bei einer Flachprobe wie folgt:

$$E = \frac{l_v^3 (X_{\mathrm{H}} - X_{\mathrm{L}})}{4 D_{\mathrm{L}} b a^3}$$

mit:

- E: Biegemodul in kN/mm²
- $l_v$: Stützweite in mm
- $X_{\mathrm{H}}$: Ende der Biegemodulermittlung in kN
- $X_{\mathrm{L}}$: Beginn der Biegemodulermittlung in kN
- $D_{\mathrm{L}}$: Durchbiegung in mm zwischen $X_{\mathrm{H}}$ und $X_{\mathrm{L}}$
- b: Probenbreite in mm
- a: Probendicke in mm

Siehe auch DIN EN ISO 178:2013-09.

Teil der Erfindung ist selbstverständlich auch die Verwendung eines erfindungsgemäßen Kern-Mantel-Halbzeuges zur Erzeugung eines Bauteils.

Wie bereits oben angedeutet, lassen sich mit diesem Kern-Mantel-Halbzeug besonders einfach Bauteile erzeugen.

Teil der Erfindung ist auch ein Verfahren zur Herstellung eines erfindungsgemäßen Kern-Mantel-Halbzeuges, umfassend die Schritte

a) Bereitstellen eines wie oben beschriebenen Kerns und

b) Umhüllen des Kerns mit einem Mantel, ebenfalls wie oben beschrieben.

Ebenfalls Teil der Erfindung ist ein Verfahren zum Herstellen eines Formteils, umfassend die Schritte:

a) Bereitstellen eines erfindungsgemäßen Kern-Mantel-Halbzeuges,

b) Bereitstellen einer Form,

c) Einlegen des Kern-Mantel-Halbzeuges in die Form und

d) Umformen des Kern-Mantelhalbzeugs durch das Formwerkzeug, bevorzugt in einer Presse

e) Aushärten des Kernmaterials.

Ebenfalls Teil der Erfindung ist ein Verfahren zum Herstellen eines Formteils, umfassend die Schritte:

a) Bereitstellen eines erfindungsgemäßen Kern-Mantel-Halbzeuges (evakuiert),

b) Bereitstellen einer Form,

c) Einlegen des evakuierten Kern-Mantel-Halbzeuges in die Form und

d) Belüften des evakuierten Kern-Mantelhalbzeugs

d) Umformen des belüfteten Kern-Mantelhalbzeugs durch das Formwerkzeug, bevor- zugt in einer Presse

e) Evakuieren des Kern-Mantel-Halbzeugs

f) Aushärten des Kernmaterials.

Selbstverständlich ist es bei dem erfindungsgemäßen Verfahren zum Herstellen eines Formteils bevorzugt, dass die Manteloberflächen mit den entsprechenden bevorzugten Dehäsionseigenschaften ausgestattet sind.

Die mit dem erfindungsgemäßen Verfahren hergestellten Kern-Mantel-Halbzeuge - wie die erfindungsgemäßen Kern-Mantel-Halbzeuge generell - weisen allgemein - insbesondere in den bevorzugten Ausgestaltungsformen - eines oder mehrere der folgenden Vorteile auf:

- Es wird eine ausreichende Handhabungsfestigkeit erzeugt, da über das Vakuum Lagen gegeneinander gepresst und so versteift werden.

- Lufteinschlüsse und Basenbildung während des Härtens des Bauteils in der Form können auf diese Art vermieden werden.

- Versteifungselemente und Matrix sind auch im Zustand des Halbzeugs lagerfähig, insbesondere weil sie durch den Mantel geschützt sind.

- Der Kern ist durch den Mantel gegen Kontamination zum Beispiel beim Transport geschützt.

- Die erfindungsgemäßen Halbzeuge können von formgebenden Werkzeugen zusätzlich kalt oder warm kompaktiert und gegebenenfalls mehrfach umgeformt werden.

- Es ist bei einer geeigneten Versteifungselement-Matrix auch möglich, dass eine Handhabung vergleichbar zu Blechen ermöglicht wird.

- Es kann auf Trennmittel und/oder Trennbeschichtungen in den Formwerkzeugen oder das Aufspannen und Tiefziehen von Trennfolien verzichtet werden.

- Es ist möglich, das FVK-Bauteil nach Aushärtung durch den Mantel inhärent vor Verunreinigungen wie Staub und Wasser zu schützen. Insbesondere ist es hierfür möglich, eine geeignete plasmapolymere Beschichtung auf der Außenseite (der zur Form hingerichteten Seite) des Mantels zu wählen, wobei es bevorzugt ist, dass eine solche plasmapolymere Beschichtung mit Schutzfunktion einen verhältnismäßig hohen Sauerstoffgehalt und einen verhältnismäßig geringen Kohlenstoffgehalt aufweist. Gleichzeitig kann es sinnvoll sein, dass auf der Innenseite (der zum Kern hingerichteten Seite) des Mantels zur Verbesserung der Abziehbarkeit des Mantels vom Bauteil ein hoher C-Gehalt und ein entsprechender niedriger Sauerstoffgehalt für eine Oberflächenbeschichtung, insbesondere eine plasmapolymere Beschichtung gewählt wird.

- Die ausgehärtete FVK-Bauteiloberfläche ist nach dem Abziehen des Mantels nicht mit Trennmittelrückständen belegt und kann somit ohne aufwändige Vorbehandlung wie Abschleifen geklebt oder lackiert werden.

- Die eingesetzten Formgebungswerkzeuge (Formen) müssen nicht von Harz- und Trennmittelrückständen gereinigt werden.

Nachfolgend wird die Erfindung anhand von Figuren und Beispielen näher erläutert.

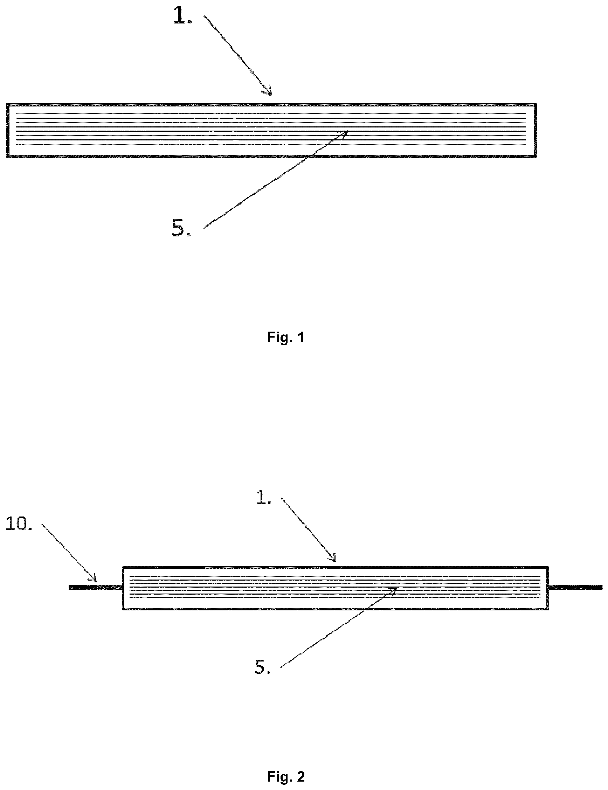

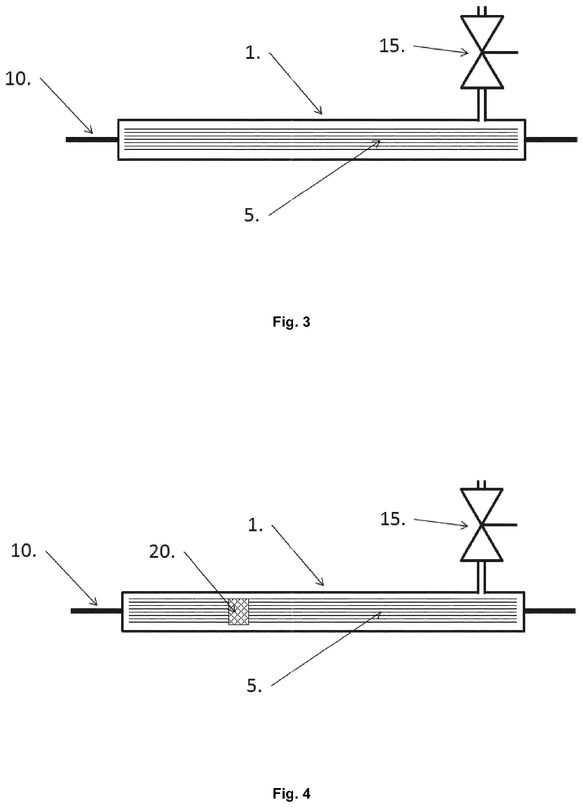

Die Figuren 1 bis 4 stellen schematisch erfindungsgemäße Kern-Mantel-Halbzeuge dar.
Dabei bedeuten die Bezugszeichen:

1 Kern
5 Mantel
10 Fügestelle des Mantels
15 Absperrventil
20 Einlegeelement

Es ist deutlich zu erkennen, dass der Kern 5 aus mehreren Lagen/Matrix-Material wie zum Beispiel in Form von Prepregs besteht. Der Kern ist vollständig von Mantel 1 umschlossen.
In Figur 2 ist noch zusätzlich eine Fügestelle 10 des Mantels eingezeichnet. An dieser Stelle ist der Mantel beispielsweise mittels einer thermischen Verfahrens verschweißt.
Figur 3 und 4 bilden zusätzlich ein Absperrventil 15 ab, mittels dessen der Mantel (Teil-) evakuiert werden kann, wenn an das Ventil kein entsprechender Unterdruck angelegt wird.

In Figur 4 ist zusätzlich noch ein Einlegeelement 20 dargestellt.

## Beispiele:

## Beispiel 1

Herstellung eines Erfindungsgemäßen Kern-Mantel-Halbzeugs, am Beispiel von Prüfkörpern für Biegeversuche, auf Basis einer schmelzfähigen Polymerfolie, einem Kohlenstofffaserhalbzeug und einem Vakuumsack.

## Vorbereitung: Vakuumsack:

Ein rechteckiger Zuschnitt (150 mm Länge und 70 mm Breite) einer thermoplastischen Polyesterelastomerfolie (auf Basis von Polybutylenterephthalat; mit einem Flächengewicht von ca. 49 g/m², einer Reißfestigkeit gem. ISO 527-3/2/500 von ca. 35 N/mm², einer Bruchdehnung gem. ISO 527-3/2/500 von ca. 450 % und einem Erweichungsbereich, gemessen mit einer Koflerbank, um ca. 190 °C, TPE-Film, Qualität 11133, der Firma Infiana Germany GmbH & Co. KG) mit einer Materialstärke von 40 μm und einer beidseitig aufgebrachten plasmapolymeren Trennschicht (jeweils ca. 30 nm, mit einer chemischen Zusammensetzung an der Oberfläche gemäß XPS-Analyse von ca. 53,8 at% C, ca. 22,4 at% Si und ca. 23,8 at% O [ohne die Berücksichtigung von Wasserstoff]), nachfolgend Trennfolie genannt, wird auf einer planen Oberfläche ausgebreitet und mit Haftklebeband fixiert.

## Vorbereitung: Matrix/Halbzeug

Die Matrix (Polypropylen, Materialstärke: 100 μm, Schmelzpunkt: 160 - 170°C, Transferfolie von dem A-SPREAD Kohleband, s.u.), ein Thermoplast in Folienform, bedarf keiner weiteren Vorbehandlung. Diese Polypropylenfolie befindet sich bereits auf dem Faserhalbzeug, einem UD-Kohlenstofffaserband (A-SPREAD Kohleband, Flächengewicht: 40 g/m², Breite: 22 mm, Bestellnummer: 19704022-DU-8, Lieferant: R&G Faserverbundwerkstoffe GmbH, Waldenburch Göttingen, Deutschland).

Bei herkömmlichen Prozessen wird diese Folie entfernt und dient nicht als Matrix für Faserverbundkunststoffe. In diesem speziellen Fall wird die Folie zusammen mit dem Halbzeug in Streifen (100 mm Länge und 22 mm Breite) mit UD-Orientierung in Längsrichtung geschnitten.

## Kombination: Vakuumsack und Matrix Halbzeug:

Diese Zuschnitte werden mittig auf der ausgebreiteten Trennfolie aufgeschichtet, sodass ein Laminat, bestehend alternierend aus 12 Lagen Matrixfolie und 12 Lagen Faserhalbzeug (mit der Faserausrichtung 12 x 0°), entsteht.

Anschließend wird um das Laminat herum parallel zu den 4 Schnittkanten Vakuumdichtband (LTT18, Material: Butylkautschuk, Breite: 7 mm, Höhe 2mm, Hersteller: Airtech, Differdange, Luxembourg) aufgelegt. Hierbei wird darauf geachtet, dass der Laminataufbau und das Vakuumdichtklebeband nicht in direkten Kontakt kommen, damit das Vakuumdichtband nicht an dem Bauteil anhaftet.

Über eine Einmalkanüle (SUPRA, Außendurchmesser: 2 mm, Länge: 80 mm, Hersteller: Vivomed GmbH, Geislingen, Deutschland) wird der spätere Vakuumsack evakuiert. Zum Schutz der Folie wird die Spitze zusätzlich in einen 10 mm langen PTFE-Schlauch (PTFE Schlauch Innendurchmesser: 2mm, Bestellnummer: S 1810-30, Hersteller: Bohlender GmbH, Grünsfeld, Deutschland) eingeführt.

Die Kanüle wird mittig über eine der beiden kürzeren Seiten, bis an den Laminataufbau, herangeführt und durch das abgelegte Dichtband fixiert. Um den Vakuumsack später vollständig abdichten zu können muss oberhalb der Fixierung zusätzliches Dichtband abgelegt werden.

Der Vakuumsack wird verschlossen indem ein weiterer Zuschnitt der Trennfolie den Aufbau vollständig abdeckt und auf das bereits abgelegte Dichtband gepresst wird.

Mit einer Vakuumpumpe und einem Manometer wird der Vakuumsack anschließend evakuiert und auf Dichtigkeit geprüft. Bei Undichtigkeiten ist die Dichtung zu prüfen bis sich ein stabiles Druckverhältnis einstellt.

Es entsteht ein erfindungsgemäßes Kern-Mantel Halbzeug. Dieses kann umgeformt werden und bleibt bei vermindertem Druck dimensionsstabil.

Die Matrix wird bei 170°C aufgeschmolzen, indem das Kern-Mantel-Halbzeug für 45 min in einem vorgeheizten Ofen platziert wird. Es entsteht aus dem erfindungsgemäßen Kern-Mantel-Halbzeug ein FVK, das nach dem Abkühlen vom Mantel gegen äußere Einflüsse geschützt wird und vor der weiteren Bearbeitung aus diesem entnommen wird.

**Beispiel 2**

Herstellung eines erfindungsgemäßen Kern-Mantel-Halbzeugs, am Beispiel von Prüfkörpern für Biegeversuche, auf Basis eines pulverförmigen Matrixharzes, einem Glasfaserhalbzeug und einem Vakuumsack

**Vorbereitung: Vakuumsack:**

Ein rechteckiger Zuschnitt (150 mm Länge und 70 mm Breite) einer Trennfolie gemäß Beispiel 1 wird auf einer planen Oberfläche ausgebreitet und mit Haftklebeband fixiert.

**Vorbereitung: Matrix/Halbzeug**

Die Matrix (A.S.SET 2020, Erweichungstemperatur ca. 40°C, Onset Temperatur Vernetzung: ca. 160 °C Lieferant: New Era Materials Sp. z o.o., Modlniczka, Polen), ein Duromer-Hotmelt in Pulverform, wird als Vorbehandlung in einem Keramikmörser homogenisiert.

Das Faserhalbzeug (UD-Glasfaserband, Leinwand Kettenverstärkt, Flächengewicht 220 g/m$^2$, Breite: 20 mm, Dicke 0,25 mm, Bestellnummer: 200 105-1, Lieferant: R&G Faserverbundwerkstoffe GmbH, Waldenburch Göttingen, Deutschland) wird in Streifen (100 mm Länge und 20 mm Breite) geschnitten.

**Kombination: Vakuumsack und Matrix Halbzeug:**

In der Mitte der vorbereiteten Trennfolie wird eine Lage des Faserhalbzeugs (mit einer Höhe von ca. 0,25 mm) drapiert. Anschließend wird eine Pulverschicht der Matrix mit einer Höhe von ca. 0,75 mm aufgebaut. Für eine gleichmäßige Auftragung wird das Faserhalbzeug vorher mit Abstandshaltern in Höhe von ca. 1,00 mm umrahmt. Dieser Schichtaufbau von Halbzeug und Matrixpulver wird einmal wiederholt und mit einer abschließenden Lage des Faserhalbzeugs versehen. Die Abstandshalter werden entfernt und es entsteht ein Laminat mit drei faserhaltigen Lagen (Faserausrichtung: 3 x 0°) und dazwischen zwei Matrix-Lagen.

Anschließend wird parallel zu den 4 Schnittkanten wie in Beispiel 1 beschrieben Vakuumdichtband aufgelegt, sowie eine Einmalkanüle eingeführt und fixiert.

Zusätzlich wird auf die Kanüle ein Filter (Minisart 16534, Filtergröße: > 0,20 μm, Hersteller: Satorius Stedim Biotech GmbH, Göttingen, Deutschland) aufgesteckt.

Der Vakuumsack wird analog zu Beispiel 1 verschlossen, evakuiert und auf Dichtigkeit geprüft.

Es entsteht ein weiteres erfindungsgemäßes Kern-Mantel-Halbzeug. Auch dieses kann umgeformt werden und bleibt bei vermindertem Druck dimensionsstabil.

Die Matrix wird bei 45 °C aufgeschmolzen und bei 170 °C vernetzt, indem das Kern-Mantel-Halbzeug für 45 min in einem vorgeheizten Ofen platziert wird. Es entsteht aus dem erfindungsgemäßen Kern-Mantel Halbzeug ein FVK, das nach dem Abkühlen vom Mantel gegen äußere Einflüsse geschützt wird und vor der weiteren Bearbeitung aus diesem entnommen wird.

**Beispiel 3**

Herstellung eines erfindungsgemäßen Kern-Mantel-Halbzeugs, am Beispiel eines Prüfkörpers für Biegeversuche, auf Basis einer vernetzbaren Polymerdispersion, einem Kohlenstofffaserhalbzeug und einem Vakuumsack.

**Vorbereitung: Vakuumsack:**

Ein rechteckiger Zuschnitt (150 mm Länge und 70 mm Breite) einer Trennfolie gemäß Beispiel 1 wird auf einer planen Oberfläche ausgebreitet und mit Haftklebeband fixiert.

**Vorbereitung: Matrix/Halbzeug**

Die Matrix setzt sich zusammen aus einer wässrigen Epoxidharz-(EP-)Dispersion (EPI-REZ Resin 6006 W68, Feststoffanteil laut Hersteller: Ca. 68 %, Epoxidharzäquivalent: 230 - 270 g/eq, Lieferant: Hexion Specialty Chemicals GmbH, Duisburg, Deutschland), einer Polyurethan-(PU-)Dispersion (Dispercoll U42, Feststoffanteil laut Hersteller: ca. 50 %, Lieferant: Bayer MaterialScience AG, Leverkusen, Deutschland) und einem Epoxidharzvernetzungsmittel in Pulverform (Dyhard 100 SF, Partikelgröße: ca. ≤ 6 μm, Zusammensetzung: ca. 97,5 % Dicyandiamid und ca. 2,5 % SiO$_2$, Lieferant: AlzChem AG, Trostberg, Deutschland) und Wasser.

Die Feststoffgehalte der verwendeten Polymerdispersionen können bei unterschiedlichen Chargen stark variieren. Daher müssen diese durch Rücktrocknung von ca. 1 g Dispersion, bei 110°C und 2 Stunden im Trockenofen ermittelt werden und ggf. bei erneuter Formulierung berücksichtigt werden.

**Tabelle 1: Feststoff- und Wassergehalt der verwendeten Epoxidharz- und Polyurethandispersion nach Rücktrocknung**

| Material | Feststoffanteil [Gew.-%] | Wasseranteil [Gew.-%] |
|---|---|---|
| Dispercoll U42 | 61,9 | 39,1 |
| EPI-REZ 6006 W68 | 50,0 | 50,0 |

Die Formulierung der Matrix (Tabelle 2) ergibt eine Matrixdispersion mit 50 % Feststoffgehalt.

**Tabelle 2: Formulierung der Matrixdispersion**

| | Formulierung Dispersion[g] | Formulierung Feststoff [g] | Formulierung Wasser [g] |
|---|---|---|---|
| EPI-REZ 6006 W68 | 1317,34 | | |
| EPI-REZ Feststoff | | 815,19 | |
| EPI-REZ Wasser | | | 502,15 |
| Dispercoll U42 | 176,37 | | |
| Dispercoll Feststoff | | 88,19 | |
| Dispercoll Wasser | | | 88,19 |
| Dyhard 100 SF | 66,68 | 66,68 | |
| Wasser | 379,71 | | 379,71 |
| Total | 1940,10 | 970,06 | 970,05 |

Die Komponenten werden in folgender Reihenfolge zusammengemischt: Zuerst wird die Epoxidharzdispersion in einer 2 Liter PE Flasche vorgelegt, danach wird die Polyurethandispersion hinzugegeben und die beiden Dispersionen mit einem Schüttelmischer (TURBULA Typ T2F, Hersteller: Willy A. Bachofen AG, Muttenz, Schweiz) für 30 Minuten homogenisiert. Es entsteht ein eine EP/PU-Dispersion.

Das Vernetzungsmittel wird in einem 1 Liter Becherglas vorgelegt und langsam mit dem Wasser überschichtet. Die Mischung wird mit Hilfe eines Magnetrührers, bei 600 U/min, 5 Minuten gerührt und gleichzeitig mit einem Dispergier (Ultra Turax basic, Hersteller: IKA®-Werke GmbH & Co. KG, Staufen, Deutschland) für 5 Minuten bei 10.000 U/min dispergiert. Es entsteht eine Vernetzerdispersion.

Die Vernetzerdispersion wird vollständig der EP/PU-Dispersion hinzugefügt und diese Mischung anschließend für weitere 30 Minuten im Schüttelmischer homogenisiert. Es entsteht eine EP/PU/Vernetzer-Dispersion.

Das Faserhalbzeug (Biaxial Kohlegelege, Orientierung: +45°/-45°, Flächengewicht: 300 g/m$^2$ (2 x 150 g/m$^2$), Länge: 1270 mm, Breite: 3000 mm, Höhe: 0,59 mm, Bestellnummer: 192300127-EBA-6 Lieferant: R&G Faserverbundwerkstoffe GmbH, Waldenburch Göttingen, Deutschland) wird auf einer Polyethylenfolie Bestellnummer: PEF01.035, Lieferant: Folienvertrieb Drewke GmbH, Hannover, Deutschland ausgelegt und mit Haftklebeband fixiert.

Pro m$^2$ des Halbzeugs müssen 689 g der 50 gewichtsprozentigen Matrix-Dispersionen aufgetragen werden, um nach der Trocknung ein Prepreg mit 644,5 g/m$^2$ zu erhalten.

Hierfür wird zuerst die Oberseite des Halbzeugs mit 344,5 g der EP/PU/VernetzerDispersion aufgetragen und mit einem Gummiabzieher homogen verteilt. Nach 2 stündiger Trocknung bei Umgebungsbedingungen wird das einseitig imprägnierte Halbzeug gewendet und die Imprägnierung der Rückseite mit weiteren 344,5 g der Matrixdispersion wiederholt. Nach 24 stündiger Trocknung bei Raumtemperatur entsteht ein trockenes Prepreg mit einem Flächengewicht von 644,5 g/m$^2$.

Aus diesem Prepreg werden Streifen 100 mm Länge und 25 mm Breite herausgetrennt.

**Kombination: Vakuumsack und Matrix Halbzeug:**

Diese Zuschnitte werden mittig auf der ausgebreiteten Trennfolie gestapelt, sodass Laminate mit 1, 2, 4, und 6 Lagen des imprägnierten Biaxialgeleges (mit der Faserausrichtung ± 45°) entstehen.

Anschließend wird parallel zu den 4 Schnittkanten Vakuumdichtband wie in Beispiel 1 beschrieben Vakuumdichtband aufgelegt, sowie eine Einmalkanüle eingeführt und fixiert.

Der Vakuumsack wird analog zu Beispiel 1 verschlossen, evakuiert und auf Dichtigkeit geprüft.

Die Matrix wird bei 50 °C aufgeschmolzen und bei 170 °C vernetzt, indem das Kern-Mantel-Halbzeug für 180 min in einem vorgeheizten Ofen platziert wird. Es entsteht aus dem erfindungsgemäßen Kern-Mantel Halbzeug ein FVK, das nach dem Abkühlen vom Mantel gegen äußere Einflüsse geschützt wird und vor der weiteren Bearbeitung aus diesem entnommen wird.

**Beispiel 4**

Herstellung eines erfindungsgemäßen Kern-Mantel-Halbzeugs auf Basis vernetzbarer Polymerdispersionen auf einem Kohlenstofffaserhalbzeug, einem zusätzlichen Einlegeelement und einem Vakuumsack.

**Vorbereitung: Vakuumsack:**

Ein rechteckiger Zuschnitt (150 mm Länge und 70 mm Breite) einer Trennfolie gemäß Beispiel 1 wird auf einer planen Oberfläche ausgebreitet und mit Haftklebeband fixiert.

**Vorbereitung: Matrix/Halbzeug**

Es wird ein Prepreg wie in Beispiel 3 bereitgestellt. Aus diesem Prepreg werden Streifen 50 mm Länge und 25 mm Breite herausgetrennt.

**Kombination: Vakuumsack und Matrix Halbzeug:**

Die präparierten Zuschnitte werden mittig auf der ausgebreiteten Trennfolie aufgeschichtet, so dass zwei 2-lagige Laminate (mit der Faserausrichtung 2 x $\pm$45°) entstehen. Zwischen diese beiden Laminate wird ein Aluminium Einleger (mit den Dimensionen 10 mm in der Länge, 25 mm in der Breite und 1,5 mm in der Höhe) gelegt, an den die Laminate auf der linken und rechten Seite eng angrenzen.

Die Präparation des Aufbaus mit dem Vakuumsack und die Härtung des Kern-Mantel-Halbzeugs erfolgt wie in Beispiel 3.

Es entsteht erfindungsgemäß ein Kern-Mantel-Halbzeug, welches einen zusätzlichen Einleger aus Aluminium beinhaltet. Durch den erfindungsgemäßen Vakuumaufbau ist eine neue Methode zur Herstellung von neuartigen Hybridmaterialien möglich. Halbzeuge, Matrix und Einleger würden ohne die Fixierung durch den Unterdruck verrutschen.

**Beispiel 5: Ergebnisse der Biegeversuche aus Beispiel 1, 2 und 3**

**Versuchsaufbau: Biegeversuche von Kern-Mantel Halbzeugen.**

Die Kernmantel-Halbzeuge werden über einen flexiblen vakuumfesten Schlauch mit einer regulierbaren Vakuumpumpe mit Manometer verbunden. Die Biegeeigenschaften unterschiedlicher Kern-Mantel Halbzeuge können so mit Hilfe einer Universalprüfmaschine in einem 3-Punkt Biegeversuch (in Anlehnung an DIN EN ISO 14125) untersucht werden.

**Ergebnisse: Biegeversuche von Kern-Mantel-Halbzeugen die nicht ausgehärtet bzw. thermisch prozessiert sind.**

**Beispiel 1**

Die Ergebnisse der Biegeversuche eines 24 lagigen Laminates auf Basis einer schmelzfähigen Polymerfolie, einem Kohlenstofffaserhalbzeug und einem Vakuumsack sind in Tabelle 3 angegeben.

**Tabelle 3: Versuchsparameter und Ergebnisse eines Dreipunktbiegeversuchs (mit und ohne Vakuum)**

| Druck mbar | Lagen | Matrix | Faser | Halbzeug | Stützweite Mm | Vorkraft N | Dicke mm | Breite mm | $\sigma_{fM}$ MPa | $F_{max}$ N | $\varepsilon$-$F_{max}$ mm |
|---|---|---|---|---|---|---|---|---|---|---|---|
| 20 | 24 | Folie | C | UD | 20 | 0,1 | 1,25 | 22 | 21,13 | 8,35 | 8,47 |
| 1000 | 24 | Folie | C | UD | 20 | 0,1 | 1,25 | 22 | 2,18 | 0,86 | 7,90 |

Für das Kernmantel-Halbzeug ergibt sich als "Normaldruckvariante" (1000 mbar) eine Biegefestigkeit ($\sigma_{fM}$) von 2,18 MPa. Für die auf 20 mbar evakuierte und damit kompaktierte Variante resultiert ein Biegemodul von 21,13 MPa. In Folge der Evakuierung konnte das Biegemodul um den Faktor 9,7 entsprechend etwa 870% erhöht werden.

**Beispiel 2**

Die Ergebnisse der Biegeversuche eines 5-lagigen Laminates auf Basis eines pulverförmigen Matrixharzes, einen Glasfaserhalbzeug und einem Vakuumsack sind in Tabelle 4 angegeben.

**Tabelle 4: Versuchsparameter und Ergebnisse eines Dreipunktbiegeversuchs (mit und ohne Vakuum)**

| Druck mbar | Lagen | Matrix | Faser | Halbzeug | Stützweite Mm | Vor kraft N | Dicke mm | Breite mm | $\sigma_{fM}$ MPa | $F_{max}$ N | $\varepsilon$-$F_{max}$ mm |
|---|---|---|---|---|---|---|---|---|---|---|---|
| 16 | 5 | Pulver | G | UD | 24 | 0,1 | 1,5 | 24,9 | 15,72 | 10,12 | 16,29 |
| 1000 | 5 | Pulver | G | UD | 24 | 0,1 | 1,5 | 24,9 | 2,95 | 1,90 | 8,35 |

Für das Kernmantel-Halbzeug ergibt sich als Normaldruckvariante (1000 mbar) ein Biegemodul ($\sigma_{fM}$) von 2,95 MPa. Für die auf 16 mbar evakuierte und damit kompaktierte Variante resultiert ein Biegemodul von 15,72 MPa. In Folge der Evakuierung konnte das Biegemodul um den Faktor 5,3 entsprechend etwa 430 % erhöht werden.

**Beispiel 3.1**

Die Ergebnisse der Biegeversuche von Laminaten mit 1, 2, 4, und 6 Lagen des imprägnierten Biaxialgeleges auf Basis von Polymerdispersionen, einem Kohlenstofffaserhalbzeug und einem Vakuumsack sind in Tabelle 5 angegeben.

**Tabelle 5: Versuchsparameter und Ergebnisse eines Dreipunktbiegeversuchs mit Laminaten aus 1, 2, 4 und 6 Prepregs (mit und ohne Vakuum)**

| Druck mbar | Lagen | Matrix | Faser | Halbzeug | Stützweite mm | Vor kraft N | Dicke mm | Breite Mm | $\sigma_{fM}$ MPa | $F_{max}$ N | $\varepsilon$-$F_{max}$ mm |
|---|---|---|---|---|---|---|---|---|---|---|---|
| 40 | 1 | Prepreg | C | Biaxial | 20 | 0,2 | 0,65 | 25 | 82,84 | 10,06 | 10,02 |
| 1000 | 1 | Prepreg | C | Biaxial | 20 | 0,2 | 0,61 | 24,97 | 67 | 7,16 | 2,98 |
| 65 | 2 | Prepreg | C | Biaxial | 20 | 0,2 | 1,2 | 25 | 61,69 | 25,53 | 9,14 |
| 1000 | 2 | Prepreg | C | Biaxial | 20 | 0,2 | 1,25 | 25 | 35,43 | 16,03 | 4,31 |
| 20-30 | 4 | Prepreg | C | Biaxial | 39 | 0,5 | 2,42 | 24,9 | 14,22 | 23,84 | 10,41 |
| 1000 | 4 | Prepreg | C | Biaxial | 39 | 0,5 | 2,45 | 25 | 5,38 | 9,28 | 8,49 |
| 14 | 6 | Prepreg | C | Biaxial | 58 | 0,5 | 3,57 | 25 | 8,10 | 29,66 | 18,06 |
| 1000 | 6 | Prepreg | C | Biaxial | 58 | 0,5 | 3,62 | 25,2 | 2,26 | 8,57 | 11,76 |

Für das Kernmantel-Halbzeug mit einer Lage ergibt sich als Normaldruckvariante (1000 mbar) ein Biegemodul ($\sigma_{fM}$) von 67 MPa. Für die auf 40 mbar evakuierte und damit kompaktierte Variante resultiert ein Biegemodul von 82,84 MPa. In Folge der Evakuierung konnte das Biegemodul um den Faktor 1,2 entsprechend 20% erhöht werden.
Für das Kernmantel-Halbzeug mit 2 Lagen ergibt sich als Normaldruckvariante (1000 mbar) ein Biegemodul ($\sigma_{fM}$) von 35,43 MPa. Für die auf 65 mbar evakuierte und damit kompaktierte Variante resultiert ein Biegemodul von 61,69 MPa. In Folge der Evakuierung konnte das Biegemodul um den Faktor 1,74 entsprechend etwa 70 % erhöht werden.
Für das Kernmantel-Halbzeug mit 4 Lagen ergibt sich als Normaldruckvariante (1000 mbar) ein Biegemodul ($\sigma_{fM}$) von 5,38 MPa. Für die auf 20 - 30 mbar evakuierte und damit kompaktierte Variante resultiert ein Biegemodul von 14,22 MPa. In Folge der Evakuierung konnte das Biegemodul um den Faktor 2,6 entsprechend etwa 160 % erhöht werden.
Für das Kernmantel-Halbzeug mit 6 Lagen ergibt sich als Normaldruckvariante (1000 mbar) ein Biegemodul ($\sigma_{fM}$) von 2,26 MPa. Für die bei 14 mbar evakuierte und damit kompaktierte Variante resultiert ein Biegemodul von 8,10 MPa. In Folge der Evakuierung konnte das Biegemodul um den Faktor 3,6 entsprechend etwa 260 % erhöht werden.
Eine zunehmende Anzahl an kompaktierbaren Lagen und damit auch eine zunehmende Dicke der Prüfkörper bewirkt eine Erhöhung dieses Faktors zwischen den vakuumkompaktierten und den unkompaktierten Varianten von 1,2 für eine Lage auf 3,6 für 6 Lagen.

**Beispiel 3.2**

Ergebnisse für Biegeversuche von 6-lagigen Laminaten auf Basis von Polymerdispersion, einem Kohlenstofffaserhalbzeug und einem Vakuumsack bei vier unterschiedlichen Drücken.

**Tabelle 6: Versuchsparameter und Ergebnisse eines Dreipunktbiegeversuchs mit 6-lagigen Laminaten und Drücken von 14, 500, 750 und 1000 mbar.**

| Druck mbar | Lagen | Matrix | Faser | Halbzeug | Stütz weite mm | Vor kraft N | Dicke mm | Breite mm | $\sigma_{fM}$ MPa | $F_{max}$ N | $\varepsilon$-$F_{max}$ mm |
|---|---|---|---|---|---|---|---|---|---|---|---|
| 14 | 6 | Prepreg | C | Biaxial | 58 | 0,5 | 3,57 | 25 | 8,10 | 29,66 | 18,06 |
| 500 | 6 | Prepreg | C | Biaxial | 58 | 0,5 | 3,63 | 25 | 5,97 | 22,62 | 13,02 |
| 750 | 6 | Prepreg | C | Biaxial | 58 | 0,5 | 3,55 | 25 | 4,28 | 15,49 | 12,06 |
| 1000 | 6 | Prepreg | C | Biaxial | 58 | 0,5 | 3,62 | 25,2 | 2,26 | 8,57 | 11,76 |

Das Biegemodul ($\sigma_{fM}$) steigt prozentual mit sinkenden Drücken um ca. 90 % bei 750 mbar, 160 % bei 500 bar bzw. 260 % bei 13 mbar im Vergleich mit dem Kernmantel-Halbzeug bei Atmosphärendruck.

**Patentansprüche**

1. Kern-Mantel-Halbzeug, umfassend einen Kern (1), der eine Matrix und Verstärkungselemente umfasst, und einen den Kern umschließenden Mantel (5), wobei der Mantel eine dehnfähige Folie umfasst oder aus dieser besteht und so ausgestaltet ist, dass er einen Unterdruck in dem von ihm umschlossenen Raum halten kann, **dadurch gekennzeichnet, dass**

   das Mantelmaterial auf der zum Kern (1) hin ausgerichteten Oberfläche über erhöhte dehäsive Eigenschaften gegenüber dem Kern (1) verfügt, verglichen mit dem Mantelmaterial im Inneren des den Mantel (5) bildenden Materials und wobei der Mantel (5) auf der zum Kern (1) hin ausgerichteten Oberfläche wenigstens teilflächig über eine plasmapolymere Schicht verfügt.

2. Kern-Mantel-Halbzeug nach Anspruch 1, wobei die Vicat-Erweichungstemperatur der dehnfähigen Folie bestimmt nach ISO 306 VST/A/50 $\geq$ 5 ° höher ist als die Vicat-Erweichungstemperatur und/oder die Aushärtungstemperatur der Matrix.

3. Kern-Mantel-Halbzeug nach einem der vorangehenden Ansprüche, wobei der Mantel (5) bei 20 °C vakuumtiefziehfähig ist.

4. Kern-Mantel-Halbzeug nach einem der vorangehenden Ansprüche, wobei der Mantel (5) eine Absaugöffnung besitzt, die ein wiederholtes Erzeugen eines Unterdruckes im Inneren des Mantels (5) ermöglicht.

5. Kern-Mantel-Halbzeug nach einem der vorangehenden Ansprüche, wobei der Druck im Inneren des Mantels (5) $\leq$ 300 hPa beträgt.

6. Kern-Mantel-Halbzeug nach einem der vorangehenden Ansprüche, wobei die Verstärkungselemente wenigstens teilweise ausgewählt sind aus der Gruppe bestehend aus Textilfaseranordnungen, insbesondere aus Endlosfasern oder Kurzfasern oder als Vlies, Gewebe oder Gelege und Fasern, insbesondere Kohlenstoff-, Glas-, Natur-, organische oder anorganische Fasern.

7. Kern-Mantel-Halbzeug nach einem der vorangehenden Ansprüche, wobei der Kern (1) mehrere Lagen eines mit einer Matrix vorimprägnierten Faserhalbzeugs (Prepreg) und/oder alternierende Lagen Verstärkungselemente und Matrix in Folienform und/oder alternierende Lagen Verstärkungselemente und Matrix in Pulverform und/oder Einlageelemente umfasst.

8. Anordnung aus einem Kern-Mantel-Halbzeug nach einem der vorangehenden Ansprüche und einem Formwerkzeug zur Herstellung eines Bauteils aus dem Kern, wobei bevorzugt der Mantel (5) gegenüber der Form nach Ausformung eines Bauteils aus dem Kern (1) am Bauteil fester haftet als an der Form.

9. Anordnung nach Anspruch 8, wobei das Mantelmaterial auf der zur Form hin ausgerichteten Oberfläche über erhöhte dehäsive Eigenschaften gegenüber der Form verfügt, verglichen mit dem Mantelmaterial im Inneren des Mantels.

10. Verwendung eines Mantels (5), wie in einem der vorangehenden Ansprüche definiert, um mittels eines Unterdruckes in dem Mantel (5) die Biegesteifigkeit eines Kerns (1) wie in einem der vorausgehenden Ansprüche definiert zu erhöhen.

11. Verwendung eines Kern-Mantel-Halbzeuges wie in einem der Ansprüche 1 bis 9 definiert zur Erzeugung eines Bauteiles.

12. Verfahren zur Herstellung eines Kern-Mantel-Halbzeuges wie in einem der Ansprüche 1 bis 9 definiert, umfassend die Schritte:

> a) Bereitstellen eines Kerns (1) wie in einem der Ansprüche 1 bis 9 definiert und
> b) Umhüllen des Kerns (1) mit einem Mantel (5) wie in einem der Ansprüche 1 bis 9 definiert.

13. Verfahren zum Herstellen eines Formteiles, umfassend die Schritte:

> a) Bereitstellen eines Kern-Mantel-Halbzeuges, wie in einem der Ansprüche 1 bis 9 definiert,
> b) Bereitstellen einer Form,
> c) Einlegen des Kern-Mantel-Halbzeuges in die Form und
> d) Aushärten des Kernmaterials.

## Claims

1. Core-shell semi-finished product comprising a core (1), which comprises a matrix and reinforcing elements, and a shell (5) surrounding the core, wherein the shell comprises or consists of an extensible film and is configured such that it can hold a negative pressure in the space surrounded by it, **characterized in that** the shell material on the surface oriented toward the core (1) possesses increased dehesive properties in relation to the core (1), compared to the shell material in the interior of the material forming the shell (5), and wherein the shell (5) on the surface oriented toward the core (1) possesses a plasma-polymeric layer over at least part of its area.

2. Core-shell semi-finished product according to Claim 1, wherein the Vicat softening temperature of the extensible film, determined according to ISO 306 VST/A/50, is $\geq 5°$ higher than the Vicat softening temperature and/or the curing temperature of the matrix.

3. Core-shell semi-finished product according to either of the preceding claims, wherein the shell (5) is vacuum-thermoformable at 20°C.

4. Core-shell semi-finished product according to any of the preceding claims, wherein the shell (5) has a suction withdrawal opening which allows repeated generation of a negative pressure in the interior of the shell (5).

5. Core-shell semi-finished product according to any of the preceding claims, wherein the pressure in the interior of the shell (5) is $\leq 300$ hPa.

6. Core-shell semi-finished product according to any of the preceding claims, wherein the reinforcing elements are at least partially selected from the group consisting of textile fibre arrangements, more particularly of continuous fibres or short fibres or as a nonwoven, woven fabric or laid fabric, and fibres, more particularly carbon, glass, natural, organic or inorganic fibres.

7. Core-shell semi-finished product according to any of the preceding claims, wherein the core (1) comprises a plurality of plies of a semi-finished fibre product preimpregnated with a matrix (prepreg) and/or alternating plies of reinforcing elements and matrix in film form and/or alternating plies of reinforcing elements and matrix in powder form and/or insert elements.

8. Arrangement comprising a core-shell semi-finished product according to any of the preceding claims and a moulding tool for producing a component comprising the core, wherein preferably the shell (5), in relation to the mould, adheres more firmly to the component than to the mould after the moulding of a component comprising the core (1).

9. Arrangement according to Claim 8, wherein the shell material on the surface oriented toward the mould possesses increased dehesive properties in relation to the mould, compared to the shell material in the interior of the shell.

10. Use of a shell (5) as defined in any of the preceding claims to increase the bending stiffness of a core (1) as defined in any of the preceding claims by means of a negative pressure in the shell (5).

11. Use of a core-shell semi-finished product as defined in any of Claims 1 to 9 for generating a component.

12. Method for producing a core-shell semi-finished product as defined in any of Claims 1 to 9, comprising the steps of:

    a) providing a core (1) as defined in any of Claims 1 to 9 and
    b) wrapping the core (1) with a shell (5) as defined in any of Claims 1 to 9.

13. Method for producing a moulded part, comprising the steps of:

    a) providing a core-shell semi-finished product as defined in any of Claims 1 to 9,
    b) providing a mould,
    c) inserting the core-shell semi-finished product into the mould, and
    d) curing the core material.

**Revendications**

1. Demi-produit noyau-enveloppe, comprenant un noyau (1), qui comprend une matrice et des éléments de renforcement, et une enveloppe (5) entourant le noyau, dans lequel l'enveloppe comprend un film extensible ou est constituée de celui-ci et est configurée de manière à pouvoir maintenir une dépression dans l'espace qu'elle entoure, **caractérisé en ce que**
le matériau d'enveloppe dispose, sur la surface orientée vers le noyau (1), de propriétés anti-adhésives élevées par rapport au noyau (1), en comparaison avec le matériau d'enveloppe à l'intérieur du matériau formant l'enveloppe (5) et dans lequel l'enveloppe (5) dispose, sur la surface orientée vers le noyau (1), au moins en partie d'une couche de plasmapolymère.

2. Demi-produit noyau-enveloppe selon la revendication 1, dans lequel la température de ramollissement Vicat du film extensible, déterminée selon la norme ISO 306 VST/A/50, est supérieure d'au moins 5° à la température de ramollissement Vicat et/ou à la température de durcissement de la matrice.

3. Demi-produit noyau-enveloppe selon l'une quelconque des revendications précédentes, dans lequel l'enveloppe (5) est capable d'être emboutie sous vide à 20 °C.

4. Demi-produit noyau-enveloppe selon l'une quelconque des revendications précédentes, dans lequel l'enveloppe (5) possède une ouverture d'évacuation par aspiration, qui permet de générer à plusieurs reprises une dépression à l'intérieur de l'enveloppe (5).

5. Demi-produit noyau-enveloppe selon l'une quelconque des revendications précédentes, dans lequel la pression à l'intérieur de l'enveloppe (5) est $\leq$ 300 hPa.

6. Demi-produit noyau-enveloppe selon l'une quelconque des revendications précédentes, dans lequel les éléments de renforcement sont au moins en partie choisis dans le groupe constitué d'ensembles de fibres textiles, en particulier de fibres continues ou de fibres courtes ou sous forme de non-tissé, tissu ou trame et fibres, en particulier des fibres de carbone, de verre, naturelles, organiques ou inorganiques.

7. Demi-produit noyau-enveloppe selon l'une quelconque des revendications précédentes, dans lequel le noyau (1) comprend plusieurs couches d'un demi-produit à base de fibres préimprégné avec une matrice (Prepreg) et/ou des couches alternées d'éléments de renforcement et de matrice sous forme de films et/ou des couches alternées d'éléments de renforcement et de matrice sous forme de poudre et/ou des éléments d'insertion.

8. Ensemble composé d'un demi-produit noyau-enveloppe selon l'une quelconque des revendications précédentes et d'un outil de moulage pour la fabrication d'un composant à partir du noyau, dans lequel de manière préférée l'enveloppe (5) adhère par rapport au moule plus fermement au composant qu'au moule après le démoulage d'un composant de l'enveloppe (1).

9. Ensemble selon la revendication 8, dans lequel le matériau d'enveloppe dispose de propriétés anti-adhésives élevées sur la surface orientée vers le moule, en comparaison avec le matériau d'enveloppe à l'intérieur de l'enveloppe.

10. Utilisation d'une enveloppe (5), telle que définie dans l'une quelconque des revendications précédentes, pour augmenter la rigidité en flexion d'un noyau (1) tel que défini dans l'une quelconque des revendications précédentes au moyen d'une dépression dans l'enveloppe (5).

11. Utilisation d'un demi-produit noyau-enveloppe tel que défini dans l'une quelconque des revendications 1 à 9 pour la production d'un composant.

12. Procédé de fabrication d'un demi-produit noyau-enveloppe tel que défini dans l'une quelconque des revendications 1 à 9, comprenant les étapes :

a) de fourniture d'un noyau (1) tel que défini dans l'une quelconque des revendications 1 à 9 et
b) d'enveloppement du noyau (1) avec une enveloppe (5) telle que définie dans l'une quelconque des revendications 1 à 9.

13. Procédé de fabrication d'une pièce moulée, comprenant les étapes :

a) de fourniture d'un demi-produit noyau-enveloppe, tel que défini dans l'une quelconque des revendications 1 à 9,
b) de fourniture d'un moule,
c) de mise en place du demi-produit noyau-enveloppe dans le moule et
d) de durcissement du matériau de noyau.

1.

5.

**Fig. 1**

10.

1.

5.

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013227142 A1
- DE 102013219331 B3
- DE 102006018491 A1
- WO 2014124945 A1
- EP 2145751 A1

**In der Beschreibung aufgeführte Nicht-Patentliteratur**

- **G. HABENICHT, KLEBEN**. Grundlagen, Technologien, Anwendungen. Springer-Verlag, 2009